# EUROPÄISCHE PATENTANMELDUNG

(11) **EP 2 223 820 A2**
(43) Veröffentlichungstag der Anmeldung: **01.09.2010**
(21) Anmeldenummer: 10151787.8
(22) Anmeldetag: 27.01.2010
(51) Int. Cl.: B60K 35/00

(54) **Einrichtung zur Anzeige mehrerer erfassbarer variabler Größen**

(30) Priorität: 27.02.2009 DE 102009010810
(71) Anmelder: Continental Automotive GmbH, 30165 Hannover (DE)
(72) Erfinder: Cieler, Stephan, 60316, Frankfurt (DE); Lübbert, Katrin, 64289, Darmstadt (DE); Meier-Arendt, Guido, 63225, Langen (DE); Solterbeck, Carmen, 60325, Frankfurt (DE)

(57) **Zusammenfassung**

Die Erfindung bezieht sich auf eine Einrichtung zur Anzeige mehrerer erfassbarer variabler Größen eines Kraftfahrzeugs, die in einem Verhältnis zueinander stehen, wobei jede Größe durch ein Band darstellbar ist und die Bänder derart zueinander angeordnet sind, dass sie eine variable geometrische Figur bilden. Die Bänder besitzen eine abhängig von der Abweichung von einem optimalen Verhältnis der Größen zueinander variable Länge und kreuzen sich in einem Schnittbereich.

## Beschreibung

Die Erfindung bezieht sich auf eine Einrichtung zur Anzeige mehrere erfassbarer variabler Größen eines Kraftfahrzeugs, die in einem Verhältnis zueinander stehen, wobei jede Größe durch ein Band darstellbar ist und die Bänder derart zueinander angeordnet sind, dass sie eine variable geometrische Figur bilden.

Bei einer derartigen Einrichtung ist es bekannt mehrere voneinander unabhängige Anzeigen mehrerer erfassbarer variabler Größen durch Leuchtbänder dazustellen, die aus einzelnen ansteuerbaren Leuchtzellen bestehen. Dabei sind die Leuchtbänder derart zueinander angeordnet, dass durch angesteuerte Leuchtzellen von theoretisch einander zuordenbaren Werten eine bestimmte geometrische Figur gebildet wird.

Dabei können die Größen kraftfahrzeugspezifische Größen wie z. B. die Fahrzeuggeschwindigkeit und/oder die Motordrehzahl und/oder der momentane durchschnittliche Kraftstoffverbrauch sein.

Bringt man die Anzeigen dieser drei Größen dazu, dass die bestimmte geometrische Figur zum Aufleuchten kommt, so kann man damit anzeigen, dass hinsichtlich des Kraftstoffverbrauchs eine Fahrweise mit optimalen Betriebsbedingungen erfolgt.

Die Anordnung der drei Anzeigen nebeneinander erfordert einen großen Platzbedarf.

Aufgabe der Erfindung ist es daher eine Einrichtung der eingangs genannten Art zu schaffen, die bei geringem Platzbedarf eine von einem Beobachter leicht und schnell erfassbare Information vermittelt.

Diese Aufgabe wird erfindungsgemäß dadurch gelöst, dass die Bänder eine abhängig von der Abweichung von einem optimalen Verhältnis der Größen zueinander eine variable Länge besitzen und sich in einem Schnittbereich kreuzen.

Damit ist es einem Beobachter leicht möglich zu erfassen, ob die erfassten Größen sich in einem optimalen Verhältnis zueinander befinden und wenn nicht, welche der Größen wie stark vom Optimum abweicht und korrigiert werden sollte.

Dabei können die Bänder entweder bei optimalem Verhältnis der variablen Größen zueinander ihre geringste Länge aufweisen oder bei optimalem Verhältnis der variablen Größen zueinander ihre größte Länge aufweisen.

Eine symmetrische Darstellung wird erhalten, wenn die Bänder sich mittig kreuzen.

Die Bänder können unterschiedliche Konturen aufweisen.

So ist es möglich, dass die Bänder z. B. eine rechteckartige Kontur oder aber auch eine ellipsenartige Kontur besitzen.

Um dem Beobachter eine Information über eine ökologisch günstige Fahrweise zu geben können die variablen Größen die momentane Fahrgeschwindigkeit und/oder die momentane Motordrehzahl und der momentane Gang des Getriebes des Kraftfahrzeugs sein.

Die Erfassbarkeit der einzelnen Größen durch den Beobachter kann dadurch erhöht werden, dass die Bänder unterschiedlich farbig sind, wobei der Aussagegehalt für den Beobachter noch weiter verbessert wird, wenn die Farbe oder die Farbintensität der Bänder abhängig von der jeweiligen Länge der Bänder variabel ist.

In einfacher Weise können die Bänder von einem optoelektronischen Display darstellbar sein.

Zu einer klaren Erkennbarkeit führt es, wenn die Bänder Leuchtbänder sind.

Um dem Beobachter eine Information über das längerfristige Fahrverhalten zu geben, kann auf einem weiteren Display die Zeit oder die gefahrenen Kilometer des Fahrbetriebs bei optimalem und/oder bei nichtoptimalem Verhältnis der Größen zueinander anzeigbar sein.

Dazu kann die Zeit oder die gefahrenen Kilometer des optimalen und/oder nichtoptimalen Verhältnisses der Größen zueinander mittels eines Bargraphs darstellbar sein.

Eine andere Möglichkeit besteht darin, dass die Zeit oder die gefahrenen Kilometer des optimalen und/oder nichtoptimalen Verhältnisses der Größen zueinander in Zahlenwerten darstellbar sind.

Ein Ausführungsbeispiel der Erfindung ist in der Zeichnung dargestellt und wird im Folgenden näher beschrieben. Es zeigen:
- Figur 1: eine Einrichtung mit Darstellung zu hoher Geschwin- digkeit,
- Figur 2: die Einrichtung nach Figur 1 mit Darstellung eines optimalen Verhältnisses der Geschwindigkeit zur mo- mentanen Gangwahl,
- Figur 3: die Einrichtung nach Figur 1 mit Darstellung sub- optimaler Geschwindigkeit und Gangwahl.

Die Figuren zeigen eine Anzeigetafel eines Kraftfahrzeugs mit einer kreisförmigen Geschwindigkeitsskala 1.

Von der Geschwindigkeitsskala 1 umschlossen ist eine Einrichtung zur Anzeige der Geschwindigkeit und der Gangwahl, die aus zwei sich rechtwinklig mittig kreuzenden Leuchtbändern 2 und 3 besteht.

Dabei ist durch das waagrechte Leuchtband 2 die Geschwindigkeitsinformation und durch das Leuchtband 3 die Gangwahlinformation darstellbar.

Die Leuchtbänder 2 und 3 besitzen eine ellipsenartige Kontur.

Die Darstellung beider Leuchtbänder 2 und 3 ist in ihrer Länge variabel.

Je geringer die Länge eines Leuchtbandes 2 und 3 ist, umso optimaler ist diese Größe für eine ökologische Fahrweise.

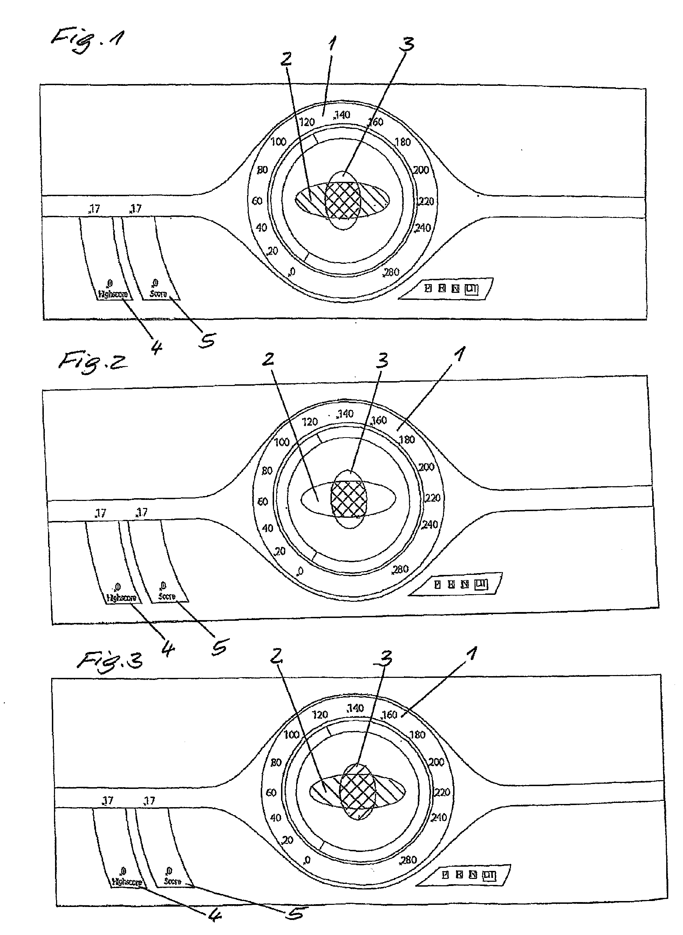

So zeigt die Figur 1 mit ihrem langen Leuchtband 2 und dem kurzen Leuchtband 3, dass momentan die Geschwindigkeit des Kraftfahrzeugs zu hoch für den gewählten Gang ist.
Figur 2, in der sowohl das Leuchtband 2 als auch das Leuchtband 3 ihre geringste Länge besitzen, zeigt an, dass die momentane Geschwindigkeit in einem optimalen Verhältnis zum gewählten Gang des Getriebes des Kraftfahrzeugs ist.
Figur 3 wiederum zeigt durch beide langen Leuchtbänder 2 und 3 an, dass sowohl Geschwindigkeit als auch der gewählte Gang suboptimal sind.

Links neben der Geschwindigkeitsskala 1 befindet sich eine erste Bargraphanzeige 4 und eine zweite Bargraphanzeige 5.

Durch die erste Bargraphanzeige 4 wird die aufsummierte Zeit dargestellt, bei der das Kraftfahrzeug bei optimalem Verhältnis von Geschwindigkeit und Gangwahl zueinander betrieben wurde.

Die Bargraphanzeige 4 zeigt die aufsummierte Zeit an, bei der das Kraftfahrzeug bei optimalem Verhältnis von Geschwindigkeit und Gangwahl zueinander betrieben wurde, wobei davon die Zeit subtrahiert wurde, in der kein derartiger optimaler Fahrbetrieb stattfand.

## Patentansprüche

1. Einrichtung zur Anzeige mehrere erfassbarer variabler Größen eines Kraftfahrzeugs, die in einem Verhältnis zueinander stehen, wobei jede Größe durch ein Band darstellbar ist und die Bänder derart zueinander angeordnet sind, dass sie eine variable geometrische Figur bilden, **dadurch gekennzeichnet, dass** die Bänder eine abhängig von der Abweichung von einem optimalen Verhältnis der Größen zueinander eine variable Länge besitzen und sich in einem Schnittbereich kreuzen.

2. Einrichtung nach Anspruch 1, **dadurch gekennzeichnet, dass** die Bänder bei optimalem Verhältnis der variablen Größen zueinander ihre geringste Länge aufweisen.

3. Einrichtung nach Anspruch 1, **dadurch gekennzeichnet, dass** die Bänder bei optimalen Verhältnis der variablen Größen zueinander ihre größte Länge aufweisen.

4. Einrichtung nach einem der vorhergehenden Ansprüche, **dadurch gekennzeichnet, dass** die Bänder sich mittig kreuzen.

5. Einrichtung nach einem der vorhergehenden Ansprüche, **dadurch gekennzeichnet, dass** die Bänder eine rechteckartige Kontur besitzen.

6. Einrichtung nach einem der vorhergehenden Ansprüche, **dadurch gekennzeichnet, dass** die Bänder eine ellipsenartige Kontur besitzen.

7. Einrichtung nach einem der vorhergehenden Ansprüche, **dadurch gekennzeichnet, dass** die variablen Größen die momentane Fahrgeschwindigkeit und/oder die momentane Motordrehzahl und der momentane Gang des Getriebes des Kraftfahrzeugs ist.

8. Einrichtung nach einem der vorhergehenden Ansprüche, **dadurch gekennzeichnet, dass** die Bänder unterschiedlich farbig sind.

9. Einrichtung nach Anspruch 8, **dadurch gekennzeichnet, dass** die Farbe oder die Farbintensität der Bänder abhängig von der jeweiligen Länge der Bänder variabel ist.

10. Einrichtung nach einem der vorhergehenden Ansprüche, **dadurch gekennzeichnet, dass** die Bänder von einem optoelektronischen Display darstellbar sind.

11. Einrichtung nach einem der vorhergehenden Ansprüche, **dadurch gekennzeichnet, dass** die Bänder Leuchtbänder (2, 3) sind.

12. Einrichtung nach einem der vorhergehenden Ansprüche, **dadurch gekennzeichnet, dass** von einem weiteren Display die Zeit oder die gefahrenen Kilometer des Fahrbetriebs bei optimalem und/oder bei nichtoptimalem Verhältnis der Größen zueinander anzeigbar ist.

13. Einrichtung nach Anspruch 12, **dadurch gekennzeichnet, dass** die Zeit oder die gefahrenen Kilometer des optimalen und/oder nichtoptimalen Verhältnisses der Größen zueinander mittels eines Bargraphs (4) darstellbar ist.

14. Einrichtung nach Anspruch 12, **dadurch gekennzeichnet, dass** die Zeit oder die gefahrenen Kilometer des optimalen und/oder nichtoptimalen Verhältnisses der Größen zueinander in Zahlenwerten darstellbar sind.
